Europäisches Patentamt

European Patent Office

Office européen des brevets

(19)

(11) Veröffentlichungsnummer: **0 235 622**
**A2**

# (12) EUROPÄISCHE PATENTANMELDUNG

(21) Anmeldenummer: **87101804.0**

(22) Anmeldetag: **10.02.87**

(51) Int. Cl.⁴: **H04M 19/00 , H04M 19/08**

(30) Priorität: **13.02.86 DE 3604538**

(43) Veröffentlichungstag der Anmeldung:
**09.09.87 Patentblatt 87/37**

(84) Benannte Vertragsstaaten:
**AT BE CH DE FR GB IT LI LU NL**

(71) Anmelder: **Siemens Aktiengesellschaft Berlin und München**
**Wittelsbacherplatz 2**
**D-8000 München 2(DE)**

(72) Erfinder: **Leistner, Rudolf, Dipl.-Ing. (FH)**
**Am Spitzberg 7**
**D-8021 Baierbrunn(DE)**
Erfinder: **Baran, Marian, Dipl.-Ing.**
**Waakirchner Strasse 48**
**D-8000 München 70(DE)**

(54) **Schaltungsanordnung für die Stromversorgung einer aus einer Hauptsprechstelle und mehreren Nebensprechstellen bestehenden Nebenstellenanlage.**

(57) Die Erfindung betrifft eine Schaltungsanordnung für eine Fernsprechanlage, bestehend aus einer Hauptsprechstelle und mehreren Nebensprechstellen, zwei Amtsleitungen und einem zentralen Wecker. Alle Einheiten sind über die vorgeschriebene sechzehnpolige Postanschlußdose zu verbinden. Die Stromversorgung erfolgt über ein Steckernetzgerät, aus welchem zwei unterschiedliche Betriebsgleichspannungen und eine Rufwechselspannung gewonnen werden. Diese Spannungen werden über einen Mikrocomputer gesteuert und müssen daher ein gemeinsames Bezugspotential haben. Aus diesem Grund müssen nach bekannter Schaltungsanordnung fünf Anschlußpunkte auf der Anschlußdose für das Steckernetzgerät belegt werden. Aufgabe ist es, mit drei Anschlußpunkten auszukommen und dafür eine weitere Nebensprechstelle anzuschließen. Dies erfolgt durch Verlegen der Gleichrichter-und Regeleinheit in die Hauptsprechstelle und eine Entkopplung der abgeleiteten Rufwechselspannung, so daß ein gemeinsames Bezugspotential für alle drei Spannungen gewonnen werden kann und diese durch den Mikrocomputer gesteuert werden können.

FIG 1

# Schaltungsanordnung für die Stromversorgung einer aus einer Hauptsprechstelle und mehreren Nebensprechstellen bestehenden Fernsprechanlage

Die Erfindung betrifft eine Schaltungsanordnung für die Stromversorgung einer aus einer Hauptsprechstelle und mehreren Nebensprechstellen bestehenden Fernsprechanlage mit zwei Amtsleitungen, wobei zur Stromversorgung zwei geregelte unterschiedliche Gleichspannungen und eine Wechselspannung notwendig sind, wobei der Abgriff der Stromversorgung aus dem Starkstromnetz über ein Steckernetzgerät erfolgt und die einen gemeinsamen Potentialpunkt besitzenden Gleichspannungen mit Hilfe einer Gleichrichterund Regeleinheit gewonnen werden und einschließlich der Wechselspannung über einen Mikrocomputer geschaltet werden und wobei das Steckernetzgerät, die Sprechstellen, die Amtsleitungen und ein zentraler Wecker über eine vorgeschriebene sechzehnpolige Anschlußdose verbunden sind.

Eine vorgenannte Fernsprechanlage ist bekannt aus der Betriebsanleitung der Deutschen Bundespost, Ausgabe Juli 1982 und betreffend den Postapparat FeAp 85/89.

Hierbei geht es um eine Fernsprechanlage mit einer Hauptsprechstelle und maximal drei Nebensprechstellen. Die Anlage besitzt eine Amtsleitungen und außerdem einen zusätzlichen zentral angeordneten Wecker. In der Hauptsprechstelle sind zusätzliche Einheiten (Mikrocomputer, Spannungs- und Stromauswertungen, Ruferkennung usw.) eingebaut, die zur Steuerung der Nebensprechstellen und der Stromversorgung dienen. Die Stromversorgung erfolgt aus dem Starkstromnetz über ein zusätzliches Steckernetzgerät.

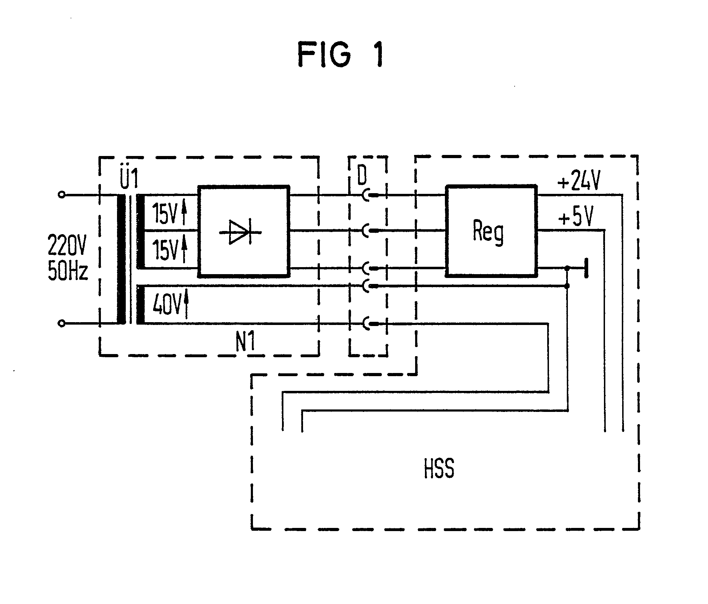

Dieses Steckernetzgerät enthält auch einen Gleichrichterteil und liefert sowohl zwei unterschiedliche Betriebsgleichspannungen als auch die Rufspannung. Alle drei Spannungen müssen von dem Mikrocomputer in der Hauptsprechstelle gesteuert werden. Dies ist nur möglich, wenn alle drei Spannungen einen gemeinsamen Potentialbezugspunkt haben. Um dies zu ermöglichen, besitzt der Übertrager Ü1 des Steckernetzgerätes N1 der bekannten Schaltungsanordnung (Fig. 1) eine erste Sekundärwicklung für die Gleichspannung $2 \times 15$ V und eine zweite Sekundärwicklung für die Rufwechselspannung 40V.

Diese Spannungen werden über eine sechzehnpolige Anschlußdose der Deutschen Bundespost der Hauptansprechstelle HSS zugeführt. Die Gleichspannungen werden dort in der Regeleinrichtung Reg auf den richtigen Verbrauchswert geregelt und auf einem Potentialbezugspunkt gelegt.

Auf den gleichen Bezugspunkt wird auch die Rufwechselspannung gelegt, so daß alle drei Spannungen von dem Mikrocomputer der Hauptsprechstelle ausgewertet werden können.

Damit werden jedoch fünf Anschlußpunkte der vorgeschriebenen Anschlußdose D allein für den Anschluß des Steckernetzgerätes N1 verbraucht, so daß bei Vorliegen von zwei Amtsleitungen nur noch drei Nebensprechstellen angeschlossen werden können.

Die Aufgabe der Erfindung soll nun darin bestehen, die Schaltungsanordnung der Stromversorgung so auszulegen, daß weniger Anschlußpunkte für das Steckernetzgerät notwendig sind und daß dafür noch eine weitere Nebensprechstelle über die Anschlußdose an die Fernsprechanlage angeschlossen werden kann.

Dies wird dadurch erreicht, daß die beiden Endpunkte der Sekundärwicklung des Übertragers im Steckernetzgerät über drei Pole der Anschlußdose mit der in der Hauptsprechstelle befindlichen Gleichrichter-und Regeleinheit verbunden sind und daß weiterhin einer der die Rufspannung liefernden und über durch den Mikrocomputer gesteuerte Kontakte zweier Relais an den Wecker der jeweils gerufenen Sprechstelle anschaltbaren Endpunkte der Sekundärwicklung über eine Spannungsauswertung und ein Entkoppelelement an den Mikrocomputer angeschaltet ist.

Hieraus ergibt sich der Vorteil, daß zum Anschluß des Steckernetzgerätes nur mehr drei Anschlußpunkte der Anschlußdose D belegt werden müssen und daß trotzdem alle drei notwendigen Betriebsspannungen vom Mikrocomputer gesteuert werden können.

Die Schaltungsanordnung wird anhand zweier Figuren näher erläutert.

Fig. 1 zeigt die Anschaltung des Steckernetzgerätes N1 an die Anschaltdose und die Hauptsprechstelle HSS mit der Regeleinrichtung Reg, wie sie aus der vorgenannten Literaturstelle bekannt ist.

Fig. 2 zeigt die Schaltungsanordnung nach dem Erfindungsgedanken. Sie besteht im wesentlichen aus den im Verzeichnis aufgeführten Baueinheiten.

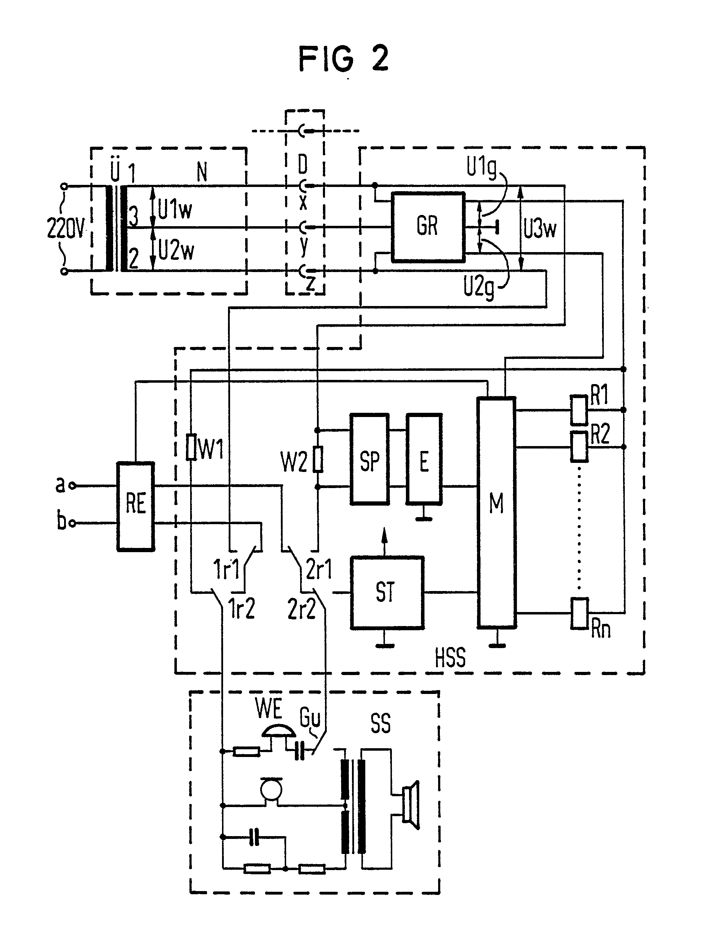

Aus der Fig. 2 kann entnommen werden, daß jetzt der Hauptsprechstelle HSS über die Anschlußdose D vom Stekkernetzgerät N aus der Sekundärwicklung von Ü1 nur mehr zwei unterschiedliche Wechselspannungen U1w und U2w zugeführt werden, die aufaddiert die dritte Spannung -die Rufwechselspannung U3w -ergeben. Damit werden auf der Anschlußdose D nur drei Anschlußpunkte x, y, z belegt. Die Gewinnung und Regelung der beiden notwendigen Gleichspannungen U1g, U2g erfolgt jetzt in der Hauptsprechstelle mit Hilfe der Gleichrichter-und Regeleinheit GR. Die beiden Gleichspannungen zwecks Schaltmöglichkeit durch den Mikrocomputer M auf ein Bezugspotential zu legen (Bezugspotential des Mikrocomputers M) ist einfach. Um auch die Rufwechselspannung U3w auf ein gleiches Bezugspotential zu legen, wird diese erst über eine Entkoppeleinheit E dem Mikrocomputer zugeführt. Eine solche Entkoppeleinheit kann beispielsweise durch einen Optokoppler oder einen Übertrager dargestellt werden (galvanische Entkopplung).

Im Betriebsfall werden durch den Mikrocomputer M die Schaltelemente R1 bis Rn je nach Bedarf geschaltet. Die Rufwechselspannung U3W wird an die Hauptsprechstelle Hss oder einer Nebensprechstelle angelegt (je nach Betriebsfall), z.B. wenn die Ruferkennungsschaltung RE einen externen Ruf erkennt und dem Mikrocomputer M dies meldet. Wenn z.B. an der Hauptsprechstelle Hss Rufspannung anliegen soll, dann schaltet der Mikrocomputer M die Schaltelemente R1 und R2 im Rufkontakt. Damit werden im Rufkontakt die Kontakte 1r1, 1r2, 2r2 und 2r1 betätigt. Während des Rufes gehen diese Kontakte in Arbeitslage und die Rufwechselspannung liegt über eine Spannungsauswertung SP und das Entkoppelelement E am Mikrocomputer M an. Würde bei vorliegendem Rufton der Gabelumschaltkontakt Gu an der gerufenen Sprechstelle betätigt, dann würde dies die Spannungsauswertung SP erkennen und über das Entkoppelelement E und der Mikrocomputer M würde eine Abschaltung des internen Ruftones erfolgen. Erfolgt die Betätigung des Gabelumschaltkontaktes Gu während einer Rufpause (die Kontakte 1r1, 1r2, 2r1, 2r2 befinden sich in Ruhelage), dann wird dies durch eine Stromauswertung ST erkannt und über den mit diesem verbundenen Mikrocomputer wird ebenfalls die interne Rufwechselspannung abgeschaltet.

Bezugszeichenliste

Ü -Übertrager
N1 -Steckernetzgerät (alt)
Reg -Regeleinrichtung
HSS -Hauptsprechstelle
D -Anschlußdose
GR -Regeleinheit
RE -Ruferkennung
ST -Stromauswertung
N -Steckernetzgerät (neu)
W1 und W2 -Dimensionierungswiderstände
SP -Spannungsauswertung
E -Entkoppeleinheit

M -Mikrocomputer
SS -Sprechschaltung
WE-Wecker
GU -Gabelumschaltkontakt
R1 bis Rn-Relais
a/b -Amtsadern
x,y,z -Pole der Anschlußdose
1r1, 1r2 und 2r1,2r2 -Relaiskontakte
U1w,U2w,U3w-Rufwechselspannungen
U1g,U2g -Gleichspannungen

## Ansprüche

Schaltungsanordnung für die Stromversorgung einer aus einer Hauptsprechstelle und mehreren Nebensprechstellen bestehenden Fernsprechanlagen mit zwei Amtsleitungen, wobei zur Stromversorgung zwei geregelte unterschiedliche Gleichspannungen und eine Wechselspannung notwendig sind, wobei der Abgriff der Stromversorgung aus dem Starkstromnetz über ein Steckernetzgerät erfolgt und die einen gemeinsamen Potentialpunkt besitzenden Gleichspannungen mit Hilfe einer Gleichrichter-und Regeleinheit gewonnen werden und einschließlich der Wechselspannung über einen Mikrocomputer geschaltet werden und wobei das Steckernetzgerät, die Sprechstellen, die Amtsleitungen und ein zentraler Wecker über eine vorgeschriebene sechzehnpolige Anschlußdose verbunden sind,
**dadurch gekennzeichnet,** daß die beiden Endpunkte (1, 2) und eine Zwischenanzapfung (3) der Sekundärwicklung des Übertragers (Ü) im Steckernetzgerät (N) über drei Pole (x, y, z) der Anschlußdose (D) mit der in der Hauptsprechstelle -(HSS) befindlichen Gleichrichterund Regeleinheit -(GR) verbunden sind und daß weiterhin einer (1) der die Rufspannung (U3w) liefernden und über durch den Mikrocomputer (M) gesteuerte Kontakte (1r1, 2r1, 1r2, 2r2) zweier Relais (R1, R2) an den Wecker (WE) der jeweils gerufenen Sprechstelle anschaltbaren Endpunkte (1, 2) der Sekundärwicklung über eine Spannungsauswertung (SP) und ein Entkoppelelement (E) an den Mikrocomputer (M) angeschaltet ist.

# FIG 1

# FIG 2